Europäisches Patentamt

European Patent Office

Office européen des brevets

(19)

(11) Veröffentlichungsnummer: **0 115 292**
**B1**

(12) # EUROPÄISCHE PATENTSCHRIFT

(45) Veröffentlichungstag der Patentschrift:
02.07.86

(21) Anmeldenummer: 84100463.3

(22) Anmeldetag: 17.01.84

(51) Int. Cl.⁴: **C 22 C 1/02, H 01 H 1/02**

(54) Verfahren zum Herstellen von Kupfer-Chrom-Schmelzlegierungen als Kontaktwerkstoff für Vakuum-Leistungsschalter.

(30) Priorität: 31.01.83 DE 3303170

(43) Veröffentlichungstag der Anmeldung:
08.08.84 Patentblatt 84/32

(45) Bekanntmachung des Hinweises auf die Patenterteilung:
02.07.86 Patentblatt 86/27

(84) Benannte Vertragsstaaten:
DE FR GB IT SE

(56) Entgegenhaltungen:
DE-A-2 522 832
DE-A-2 535 184
DE-A-2 914 186
GB-A-2 024 258
GB-A-2 066 298
US-A-4 008 081

HANSEN: "Constitution of binary alloys", Seiten 524-525 "Cr-Cu chromium-copper"

(73) Patentinhaber: Siemens Aktiengesellschaft, Berlin und München Wittelsbacherplatz 2, D-8000 München 2 (DE)

(72) Erfinder: Hässler, Heinrich, Dr., Josef- Haydn-Strasse 1, D-8501 Wendelstein (DE)
Erfinder: Müller, Reiner, An den Eichen 4, D-8524 Steinbach (DE)
Erfinder: Kippenberg, Horst, Dr., Sudetenstrasse 24, D-8522 Herzogenaurach (DE)
Erfinder: Prölss, Norbert, Bierweg 1, D-8501 Wendelstein (DE)

EP 0 115 292 B1

**Beschreibung**

Die Erfindung bezieht sich auf ein Verfahren zum Herstellen von Kupfer-Chrom-Schmelzlegierungen mit einem Chrom-Gehalt von mindestens 25 % Massengehalt und höchstens 60 % Massengehalt mit einem homogenen Makrogefüge ohne Fehlstellen und ohne Lunker zur Verwendung als Kontaktwerkstoff für Vakuum-Leistungsschalter mit Ausschaltströmen oberhalb 10 kA, bei dem aus den Legierungskomponenten Kupfer und Chrom ein Ausgangsmaterial für den Schmelzprozeß erstellt und dann dieses Ausgangsmaterial zur Schmelzlegierung erschmolzen wird.

Kontaktwerkstoffe für Vakuum-Leistungsschalter mit Ausschaltströmen oberhalb von 10 kA müssen neben der zuverlässigen Stromabschaltung noch weitere Anforderungen erfüllen. Das Kontaktmaterial muß hohe Dauerströme von mehreren tausend Ampere bewältigen, ohne daß die entstehende Verlustwärme eine unzulässige Erwärmung des Schaltrohres bewirkt. Die Schweißneigung muß im Interesse eines leichten und geräuscharmen Antriebes niedrig sein. Der Kontaktabbrand soll so gering sein, daß mindestens 100 Kurzschlußausschaltungen und 10 000 Nennstromausschaltungen gewährleistet sind, wobei aus dielektrischen Gründen der Kontakt ein glattflächiges Abbrandverhalten zeigen soll. Die Gefügeausbildung und die Zusammensetzung des Kontaktmaterials müssen so beschaffen sein, daß die Abreißstromverteilung möglichst schmal ist und der häufigste Wert nicht höher als 4 A liegt. Schließlich muß sichergestellt sein, daß beim Schmelzen und Verdampfen des Kontaktmaterials durch den Lichtbogen keine Gasanteile freigesetzt werden, die in der Schaltkammer zu einer kritischen Druckerhöhung von oberhalb $10^{-4}$ mbar führen.

Bekanntlich wird als Kontaktwerkstoff für Vakuum-Leistungsschalter vielfach ein pulvermetallurgisch erzeugter Sinter-Tränkwerkstoff eingesetzt, der als Basismaterialien Chrom und Kupfer enthält. Die Herstellung erfolgt aus besonders reinen Ausgangsstoffen in Schutzgas und/oder im Vakuum. Selbst bei Herstellung unter Hochvakuumbedingungen treten im Gefüge Störbereiche und Fehlstellen auf, die auf die Reaktivität des Chrom zurückzuführen sind. Beim Tränkprozeß führen diese Fehlstellen zu Benetzungsfehlern auf einzelnen Kornflächen des Gerüstes. Derartige Abweichungen vom idealen Gefüge können das Brenn- und Bewegungsverhalten des Lichtbogens auf den Kontaktflächen beeinflussen, sowie die Stromabschaltfähigkeit und die Spannungsfestigkeit beeinträchtigen.

Diese störenden Gefügefehler sind im allgemeinen auf das Vorhandensein stabiler Restoxide auf den Außenflächen der verwendeten Metallpulver, insbesondere des Chroms zurückzuführen.

Ein weiterer Fehler, der ebenso zum Versagen des Schaltrohres führen kann, beruht auf Verunreinigungen innerhalb der Chromkörner des Ausgangsmaterials oder nichtmetallischer Beimengungen im Chrom-Pulver. Bei elektrolytischen Chrom-Pulvern wurden im Innern der Körner gelegentlich Elektrolytreste und bei aluminothermisch gewonnenen Chrom-Pulvern Einschlüsse oder Verunreinigungen des Pulvers in Form von $Al_2O_3$ oder Aluminium-Chrom-Mischoxiden gefunden. Da beim gewöhnlichen Sinter-Tränkprozeß die gerüstbildenden Chrom-Körner nur gering angelöst werden, können solche Verunreinigungen nicht freigesetzt und durch geeignete Reinigungsverfahren beseitigt oder zumindest im Makrogefüge auf ungefährliche Konzentrationen verdünnt werden.

Entscheidend für die dielektrische Funktion des Vakuumschaltrohres ist vornehmlich der zuerst genannte Fehlertyp. Unter Wirkung der wiederkehrenden Spannung können fehlstellenbedingte, locker gebundene Kontaktmaterialpartikel aus dem Gefüge abgelöst werden und einen Spannungsdurchschlag verursachen. Der zweite Fehlertyp kann dagegen zu einem Löschversager aufgrund lokaler Gasfreisetzung führen. Eine einfache Abschätzung ergibt, daß bei einem Schaltvorgang aus Sicherheitsgründen nicht mehr als etwa 1 μg Gas vom Lichtbogen freigesetzt werden darf, um unzulässige Druckspitzen im Schaltrohr zu vermeiden. Ist diese Menge in Oxideinschlüssen enthalten, die vom Lichtbogen während des Löschvorganges erfaßt und dissoziiert werden, so muß mit einer frei gesetzten Gasmenge gerechnet werden, die das Schaltvermögen insbesondere bei hohen Strömen und entsprechenden Lichtbögen hoher Energiedichte beeinträchtigt.

Untersuchungen zahlreicher Varianten von Kontaktwerkstoffen auf Chrom-Kupfer-Basis, die im Sinter-Tränkverfahren hergestellt werden, ergab Oxidverunreinigungen mit Korndurchmessern bis zu 300 μm, deren Dissoziation eine Gasmenge von etwa 26 μg freisetzen würde. Eine Verkleinerung der mittleren Korngröße in der Absiebung der Ausgangspulver ist nur sehr begrenzt möglich, da mit geringer werdender Korngröße die Tränkbarkeit des Cr-Gerüstes schlechter wird und damit der zuerst beschriebene Fehlertyp häufiger auftritt.

Es kann deshalb davon ausgegangen werden, daß bei Verwendung pulvermetallurgisch hergestellter Kontaktwerkstoffe auf Chrom-Kupfer-Basis in Leistungsschaltern mit gewisser statistischer Wahrscheinlichkeit mit Funktionsfehlern gerechnet werden muß.

Es ist daher Aufgabe der vorliegenden Erfindung, einen Werkstoff auf Kupfer-Chrom-Basis mit mindestens 25 % Massengehalt bis höchstens 60 % Massengehalt Chrom herzustellen, der frei von den genannten Makrofehlern ist und der nichtmetallische Einschlüsse und Lunkerstellen höchstens in gleichmäßiger Feinverteilung mit Abmessungen von höchstens 50 µm und einen Gesamtgehalt unter 0,5 Volumen-% enthält.

Gemäß der Erfindung wird die Aufgabe dadurch gelöst, daß beim Aufschmelzen des Ausgangsmaterials zur Schmelzlegierung zumindest in einem Teilbereich des momentanen Schmelzvolumens eine Überhitzung auf mindestens 2273 K erreicht wird und daß dann die Schmelze mit einer solchen Abkühlungsgeschwindigkeit abgekühlt wird, daß sich dabei keine primäre Cr-Ausscheidung bzw. Entmischung einstellt.

Grundsätzlich können die genannten Nachteile durch Schmelzlegierungen vermieden werden, da hierbei keine durch Tränkfehler entstandenen Störstellen auftreten und somit die Gefahr, daß sich locker im Tränkgefüge eingebundene Partikel aus der Kontaktfläche lösen, vermieden wird. Mit den bekannten Gießverfahren lassen sich jedoch Kupfer-Chrom-Schmelzlegierungen mit Chrom-Gehalten von mehr als 25 % Massengehalt in den für Kontaktwerkstoffe üblichen Abmessungen nicht herstellen, da es selbst bei hoher Abkühlgeschwindigkeit zu primären Chrom-Ausscheidungen und Entmischungen kommt. Bereits ab 20 % Massengehalt an Chrom treten Gefügeinhomogenitäten auf, die sich oberhalb von 25 % Massengehalt unter Bildung von Entmischungseffekten erheblich verstärken. Von Chrom-Konzentrationen bis in die Nähe der Mischungslücke von 37 % Massengehalt und darüber sind mit konventionellen Gießverfahren in den für Leistungsschalterkontaktstücken gebräuchlichen Abmessungen (> 50 mm Durchmesser und > 3 mm Höhe) überhaupt nicht erreichbar.

Gerade dieser Konzentrationsbereich ist jedoch für die Anwendung als Kontaktwerkstoff für Vakuum-Leistungsschalter besonders interessant, nachdem sich gezeigt hat, daß die mit konventionellen Gießverfahren möglichen 15 % Massengehalt Chrom-Anteil einen Werkstoff ergeben, der noch keine befriedigenden Werte in Bezug auf Abbrandfestigkeit und Schweißkraft ergibt.

Wegen der geschilderten Schwierigkeiten, Chrom-Konzentrationen oberhalb 25 % Massengehalt auf schmelzmetallurgischem Wege zu erreichen, werden daher bisher alle hoch chromhaltigen Werkstoffe pulvermetallurgisch hergestellt.

Überraschenderweise hat sich gezeigt, daß mit Schmelzverfahren, die lokal begrenzt eine hohe Energiedichte in das Schmelzmaterial einbringen, Legierungen mit hohem Chrom-Anteil zwischen 25 % Massengehalt und 60 % Massengehalt auf schmelzmetallurgischem Wege erzeugt werden können, die ein gleichmäßiges Makrogefüge aufweisen und die in einer Kupfer-Matrix feinverteilt ausgeschiedene Chrom-Dendriten enthalten. Zum Aufschmelzen des Ausgangsmaterials zur Schmelzlegierung haben sich als besonders geeignet, das Lichtbogen-,Elktronenstrahl-, Laser- und Hochfrequenzplasmaschmelzen erwiesen. Allen diesen Verfahren ist gemeinsam, daß der eigentliche Aufschmelzvorgang auf eng begrenztem Raum von höchstens einigen Quadratzentimetern Schmelzoberfläche und mit Energieflächendichten von mindestens 5 kW/cm$^2$ abläuft, so daß eine Überhitzung der Schmelze auf mehr als 2273 K erreicht wird. Außerdem muß der Ort der Energieeinbringung sich relativ zur Schmelzgutoberfläche so schnell bewegen, daß zwar ein homogenes Aufschmelzen eng lokalisierter Bereiche erzielt wird, daß die Abkühlung aber so rasch verläuft, daß die Einstellung eines thermodynamischen Gleichgewichts nicht wirksam wird.

Vorteilhafterweise wird das Ausgangsmaterial nach pulvermetallurgischen Verfahren hergestellt, z.B. durch Pressen und/oder Sintern von Kupfer-Chrom-Pulvermischungen oder durch Kupfertränken eines gesinterten Chromgerüstes. Das Ausgangsmaterial kann auch als Verbundwerkstoff aus einem Kupfermantel mit einer Chrom-Pulver-Füllung erstellt werden. Weiterhin ist es möglich, das Ausgangsmaterial aus einer Kupfer-Stange mit durch Chrom-Pulver ausgefüllten Bohrungen oder aus einem mit Chrompulver ummantelten Kupferstab zu erstellen.

Als Reduktionsmittel kann dem Ausgangsmaterial bis höchstens 1 % Massengehalt Kohlenstoff zugegeben werden. Um die Getterfähigkeit des Kontaktmaterials zu erhöhen, kann dem Ausgangsmaterial Zusätze der Metalle Zirkon oder Titan beigemischt werden. Als Schutzgas für die Schmelzatmosphäre haben sich Edelgase als geeignet erwiesen, insbesondere Helium und Argon.

Mit dem Verfahren gemäß der Erfindung können Kupfer-Chrom-Werkstoffe hergestellt werden, die Chrom-Anteile bis 60 % Massengehalt in gleichmäßiger Verteilung in Form feinteiliger dendritischer Ausscheidungen enthalten. Durch die hohe lokale Energieeinbringung im Schmelzzonenbereich werden zugleich etwaige oxidische oder andere nichtmetallische Verunreinigungen aufgeschmolzen, dissoziiert und zum Teil verdampft, so daß gleichzeitig eine Reinigungswirkung auftritt. Die nichtverdampften, sondern nur aufgeschmolzenen, Verunreinigungen scheiden sich beim Erstarren sehr feinteilig in für die Schaltleistung ungefährlicher Größenordnung im Gefüge wieder aus. Der Werkstoff zeigt ein homogenes Makrogefüge ohne Fehlerstellen und ohne Lunker mit sehr guter Einbindung der dendritischen Chromausscheidungen in der Kupfermatrix. Der Gehalt an nichtmetallischen Verunreinigungen ist gegenüber den Ausgangsstoffen erniedrigt und im Gefüge gleichmäßig mit geringer Korngröße ausgeschieden.

Um die Reduzierwirkung auf oxidische Verunreinigungen zu verbessern, können dem Schutzgas z.B. Zusätze von Wasserstoffgas oder Kohlenmonoxidgas zugegeben werden.

Anhand von Ausführungsbeispielen wird die Erfindung noch näher erläutert.

**Beispiel 1**

Aus einer Pulvermischung von 65 % Massengehalt Kupferpulver und 35 % Massengehalt Chrompulver wird ein Rohling mit den Abmessungen 80 mm Durchmesser und 500 mm Länge isostatisch und einem Druck von 3000 bar gepreßt und anschließend im Vakuum bei Temperaturen knapp unterhalb oder im Falle der Ausbildung einer flüssigen Phase etwa 50 °C oberhalb des Kupferschmelzpunktes gesintert. Der gesinterte Rohling wird als Abschmelzelektrode in einen Lichtbogenschmelzofen eingesetzt und unter Helium als Schutzgas, dem als Reduktionsmittel einige Prozent Wasserstoff oder Kohlenmonoxid beigemischt sein können, umgeschmolzen. Um die geforderte hohe Energiedichte zu erreichen, soll der Lichtbogenstrom bei den gegebenen Abmessungen wenigstens 1000 A betragen. Das abgeschmolzene Elektrodenmaterial erstarrt in einer wassergekühlten Kupferkokille, wobei der entstehende Gußblock nach unten abgezogen und die Abschmelzelektrode von oben nachgeführt wird.

**Beispiel 2**

Ein dickwandiges Kupfer-Rohr aus OFHC-Kupfer wird mit Chrom-Pulver gefüllt, so daß die Massen von Kupferrohr und Chrom-Pulver gleich sind. Anschließend wird das Rohr an den Enden verschlossen und zur Querschnittsverringerung und Verdichtung des Chrom-Pulvers in einem Fließpreßwerkzeug verjüngt. Dieser Verbundkörper wird als Abschmelzelektrode in einen Lichtbogenofen eingesetzt und nach dem in Beispiel 1 beschriebenen Verfahren umgeschmolzen.

**Beispiel 3**

Ein Chrom-Kupfer-Rohling mit einem Chrom-Gehalt von etwa 50 % Massengehalt, der nach dem Sinter-Tränkverfahren aus Chrom- und Kupferpulver hergestellt wurde, wird in eine wassergekühlte Kupferkokille eingelegt und im Vakuum mit einer Elektronenstrahlkanone bis in eine Tiefe von einigen Millimetern umgeschmolzen. Der Elektronenstrahl, der auch im Impulsbetrieb arbeiten kann, wird dabei kontinuierlich oder schrittweise so über den Rohling geführt, daß nacheinander die gesamte Schaltoberfläche des späteren Kontaktstückes umgeschmolzen wird, daß aber zum gleichen Zeitpunkt stets nur ein solcher Bruchteil an Werkstoff im flüssigen Zustand ist, daß die Erstarrung schnell erfolgen kann, ohne daß der thermodynamische Gleichgewichtszustand erreicht wird, so daß ein gleichmäßiges Makrogefüge mit feinteiliger Ausscheidung von Chrom-Dendriten erreicht wird.

**Beispiel 4**

Ein aus Chrom- und Kupferpulver gepreßter Rohling mit einem Chrom-Gehalt von etwa 45 % Massengehalt wird bei etwa 1423 K gesintert und anschließend zur Restporenträckung nochmals mit flüssigem Kupfer infiltriert. Aus diesem Rohling werden Kontaktscheiben herausgearbeitet, die gegenüber den endgültigen Kontaktabmessungen noch ein geringes Übermaß aufweisen. Die Kontaktscheiben werden dann auf eine gekühlte, drehbare Platte aufgelegt und von einem elektrodenlosen Hochfrequenzplasmabrenner oberflächlich bis zu einer Tiefe von etwa 1 mm umgeschmolzen, wobei durch Drehen der Trägerplatte alle Kontaktmaterialpartien von der Plasmafackel nacheinander aufgeschmolzen werden. Nach Abdrehen der oberflächlichen Umschmelzrauhigkeiten kann die Kontaktscheibe direkt im Schaltrohr eingesetzt werden.

**Patentansprüche**

1. Verfahren zum Herstellen von Kupfer-Chrom-Schmelzlegierungen mit einem Chrom-Gehalt von mindestens 25 % Massengehalt und höchstens 60 % Massengehalt mit einem homogenen Makrogefüge ohne Fehlstellen und ohne Lunker zur Verwendung als Kontaktwerkstoff für Vakuum-Leistungsschalter mit Ausschaltströmen oberhalb 10 kA bei dem aus den Legierungskomponenten Kupfer und Chrom ein Ausgangsmaterial für den Schmelzprozeß erstellt und dann dieses Ausgangsmaterial zur Schmelzlegierung erschmolzen wird, dadurch gekennzeichnet, daß beim Aufschmelzen des Ausgangsmaterials zur Schmelzlegierung zumindest in einem Teilbereich des momentanen Schmelzvolumens eine Überhitzung auf mindestens 2273 K erreicht wird und daß dann die Schmelze mit einer solchen Abkühlungsgeschwindigkeit abgekühlt wird, daß sich dabei keine primäre Cr-Ausscheidung bzw. Entmischung einstellt.

2. Verfahren nach Anspruch 1, dadurch gekennzeichnet, daß das Ausgangsmaterial in einem Lichtbogenschmelzofen unter Schutzgasatmosphäre aufgeschmolzen wird.

3. Verfahren nach Anspruch 1, dadurch gekennzeichnet, daß das Ausgangsmaterial mittels Elektronenstrahlen aufgeschmolzen wird.

4. Verfahren nach Anspruch 1, dadurch gekennzeichnet, daß das Ausgangsmaterial mittels Laserstrahlen unter Schutzgasatmosphäre aufgeschmolzen wird.

5. Verfahren nach Anspruch 1, dadurch gekennzeichnet, daß das Ausgangsmaterial mittels Hochfrequenzplasma unter Schutzgasatmosphäre aufgeschmolzen wird.

6. Verfahren nach einem der vorhergehenden Ansprüche, dadurch gekennzeichnet, daß das Ausgangsmaterial nach pulvermetallurgischen Verfahren durch Pressen und/oder Sintern von Kupfer-Chrom-Pulvermischungen erstellt wird.

7. Verfahren nach einem der Ansprüche 1 bis 5, dadurch gekennzeichnet, daß das Ausgangsmaterial nach pulvermetallurgischen Verfahren durch Kupfertränken eines gesinterten Chromgerüstes erstellt wird.

8. Verfahren nach einem der Ansprüche 1 bis 5, dadurch gekennzeichnet, daß das Ausgangsmaterial als Verbundwerkstoff aus einem Kupfer-Mantel mit einer Chrom-Pulver-Füllung erstellt wird.

9. Verfahren nach einem der Ansprüche 1 bis 5, dadurch gekennzeichnet, daß das Ausgangsmaterial aus einer Kupfer-Stange mit durch Chrom-Pulver aufgefüllten Bohrungen erstellt wird.

10. Verfahren nach einem der Ansprüche 1 bis 5, dadurch gekennzeichnet, daß das Ausgangsmaterial aus einem der Chrompulver ummantelten Kupferstab erstellt wird. 11. Verfahren nach einem der Ansprüche 6 bis 10, dadurch gekennzeichnet, daß dem Ausgangsmaterial bis höchstens 1 % Massengehalt Kohlenstoff als Reduktionsmittel zugegeben wird.

12. Verfahren nach einem der Ansprüche 6 bis 10, dadurch gekennzeichnet, daß dem Ausgangsmaterial Zusätze der Metalle Zirkon, Titan beigemischt werden.

13. Verfahren nach einem der Ansprüche 2, 4 oder 5, dadurch gekennzeichnet, daß als Schutzgas ein Edelgas verwendet wird.

14. Verfahren nach Anspruch 13, dadurch gekennzeichnet, daß dem Schutzgas Wasserstoffgas oder Kohlenmonoxidgas als reduzierende Zusätze zugegeben werden.

## Claims

1. A process for the production of copper-chromium fusible alloys having a chromium content of at least 25% by weight and at most 60% by weight and a homogeneous macro-structure without defects and without cavities, for use as contact material in vacuum power switches with breaking currents above 10 kA, in which a starting material for the melting process is produced from the alloy components copper and chromium and this starting material is subsequently melted to form the fusible alloy, characterised in that when the starting material is melted to form the fusible alloy, superheating to at least 2273 K is achieved at least in a subregion of the actual melt volume and that the melt is cooled at a cooling rate such that no primary Cr precipitation or segregation occurs.

2. A process as claimed in Claim 1, characterised in that the starting material is melted in an arc melting furnace under a protective gas atmosphere.

3. A process as claimed in Claim 1, characterised in that the starting material is melted by means of electron beams.

4. A process as claimed in Claim 1, characterised in that the starting material is melted by means of laser beams under a protective gas atmosphere.

5. A process as claimed in Claim 1, characterised in that the starting material is melted by means of high-frequency plasma under a protective gas atmosphere.

6. A process as claimed in one of the preceding Claims, characterised in that the starting material is produced in accordance with powder-metallurgical processes by pressing and/or sintering copper-chromium powder mixtures.

7. A process as claimed in one of Claims 1 to 5, characterised in that the starting material is produced in accordance with powder-metallurgical processes by infiltrating a sintered chromium skeleton with copper.

8. A process as claimed in one of Claims 1 to 5, characterised in that the starting material is produced as a solid solution from a copper sheath with a chromium-powder filling.

9. A process as claimed in one of Claims 1 to 5, characterised in that the starting material is produced from a copper rod with bores which are filled with chromium powder.

10. A process as claimed in one of Claims 1 to 5, characterised in that the starting material is produced from a copper rod covered with chromium powder.

11. A process as claimed in one of Claims 6 to 10, characterised in that up to amaximum of 1% by weight of carbon is added to the starting material as a reducing agent.

12. A process as claimed in one of Claims 6 to 10, characterised in that the starting material is mixed with additions of the metals zirconium and titanium.

13. A process as claimed in one of Claims 2, 4 or 5, characterised in that a rare gas is used as protective gas.

14. A process as claimed in Claim 13, characterised in that hydrogen gas or carbon monoxide gas is added to the protective gas as a reducing additive.

## Revendications

1. Procédé de préparation d'alliages fusibles en cuivre et en chrome ayant une teneur massique en chrome d'au moins 25 %, et d'au plus 60 %, à texture macroscopique homogène, sans lacunes ni retassure, destinès à être utilisés comme matériau de contact pour des interrupteurs de puissance sous vide et pour des courants de coupure supèrieurs à 10 kA, qui consists à preparer, à partir des constituants d'alliages que sont le cuivre et le chrome, une matière de depart pour le processus de fusion, puis à faire fondre cette matière de départ en un alliage fusible, caractérisè en ce qu'il consiste, lors de la fusion de la matière de départ en l'alliage fusible, à atteindre au moins dans une région partielle du volume momentanément en fusion une surchauffe d'au moins 2273° K et, ensuite, à refroidir la masse fondue à une vitesse de refroidissement telle qu'il ne se produise pas de dépôt primaire de Cr ni de démixion.

2. Procédè suivant la revendication 1, caractérisé en ce qu'il consiste à faire fondre la matière de départ dans un four de fusion à l'arc électrique sous atmosphere de gaz protecteur.

3. Procéde suivant la revendication 1, caractérisé en ce qu'il consiste à faire fondre la matière de départ au moyen de faisceaux d'électrons.

4. Procédé suivant la revendication 1, caractérisé en ce qu'il consiste à faire fondre la matière de départ au moyen de faisceaux laser sous atmosphère de gaz protecteur.

5. Procédé suivant la revendication 1, caractérisé en ce qu'il consiste à faire fondre la matière de départ au moyen d'un plasma haute fréquence sous atmosphère de gaz protecteur.

6. Procédé suivant l'une des revendications precédentes, caractérisé en ce qu'il consiste à préparer la matière de départ par un procédé de métallurgie des poudres, par compression et/ou frittage de mélange de poudres de cuivre et de chrome.

7. Procédé suivant l'une des revendications 1 à 5, caractérisé en ce qu'il consiste à préparer la matière de départ par un procédé de métallurgie des poudres en imprégnant de cuivre une matrice frittée de chrome.

8. Procédè suivant l'une des revendications 1 à 5, caractérisé en ce qu'il consiste à préparer la matière de départ sous forme d'un matériau composite constitué d'une gaine de cuivre et d'un remplissage en poudre de chrome.

9. Procédé suivant l'une des revendications 1 à 5, caractérisé en ce qu'il consiste à préparer la matière de départ à partir d'une barre de cuivre ayant des perçages emplis de poudre de chrome.

10. Procédé suivant l'une des revendications 1 à 5, caractérisé en ce qu'il consiste à préparer la matière de départ à partir d'une barre de cuivre enrobée de poudre de chrome.

11. Procédé suivant l'une des revendications 6 à 10, caractérisé en ce qu'il consiste à ajouter à la matière de départ jusqu'à une teneur massique de 1 % au plus du carbone à titre d'agent réducteur.

12. Procédé suivant l'une des revendications 6 à 10, caractérisé en ce qu'il consiste à mélanger è la matière de départ des additifs de métaux que sont le zirconium et le titane.

13. Procédé suivant l'une des revendications 2, 4 ou 5, caractérisé en ce qu'il consiste à utiliser comme gaz protecteur un gaz rare.

14. Procédé suivant la revendication 13, caractérisé en ce qu'il consiste à ajouter au gaz protecteur de l'hydrogène gazeux ou du monoxyde de carbone gazeux servant d'additif réducteur.